Europäisches Patentamt

European Patent Office

Office européen des brevets

(19)

(11) Veröffentlichungsnummer : **0 402 361 B1**

(12) # EUROPÄISCHE PATENTSCHRIFT

(45) Veröffentlichungstag der Patentschrift :
22.07.92 Patentblatt 92/30

(51) Int. Cl.⁵ : **F16B 21/20, F16D 1/08**

(21) Anmeldenummer : 89901115.9

(22) Anmeldetag : 22.12.88

(86) Internationale Anmeldenummer :
PCT/EP88/01195

(87) Internationale Veröffentlichungsnummer :
WO 89/08206 08.09.89 Gazette 89/21

(54) **EINRICHTUNG ZUM BEFESTIGEN EINES RINGELEMENTES AUF EINER WELLE.**

(30) Priorität : 24.02.88 DE 3805702

(43) Veröffentlichungstag der Anmeldung :
19.12.90 Patentblatt 90/51

(45) Bekanntmachung des Hinweises auf die
Patenterteilung :
22.07.92 Patentblatt 92/30

(84) Benannte Vertragsstaaten :
FR IT

(56) Entgegenhaltungen :
WO-A-80/01305
DE-A- 2 224 437
DE-B- 2 406 151
US-A- 929 851

(73) Patentinhaber : **G.M. PFAFF
AKTIENGESELLSCHAFT
Königstrasse 154
W-6750 Kaiserslautern (DE)**

(72) Erfinder : **BOTT, Michael
Strähler Weg 38
W-7500 Karlsruhe-Durlach (DE)**

(74) Vertreter : **Klein, Friedrich
Königstrasse 154
W-6750 Kaiserslautern (DE)**

EP 0 402 361 B1

## Beschreibung

Einrichtung zum Befestigen eines Ringelementes auf einer Welle

Die Erfindung bezieht sich auf eine Einrichtung zum Befestigen eines Ringelementes auf einer Welle nach dem Oberbegriff des Anspruchs 1.

Die Befestigung von Ringelementen auf einer Welle ist äußerst problematisch, wenn diese Elemente aus sprödem Material bestehen, das beim Auftreten von radialen Preßspannungen leicht auseinander bricht. Zu diesen Ringelementen gehören insbesondere auch Ferritmagnetringe aus Keramik, die beispielsweise in Geräten mit umlaufenden Wellen dazu verwendet werden, um Impulse zur Erfassung der Drehzahl der Welle abzugeben. Dieser Einsatzzweck macht eine sichere Fixierung des Ferritmagnetringes auf der Welle notwendig. Ferritmagnetringe sind sehr spröde und gegen mechanische Belastungen, insbesondere Biege- und Zugbelastungen sehr empfindlich.

Eine bekannte Art der Befestigung eines Ferritmagnetrings auf einer Welle besteht darin, den Ferritmagnetring mit einer Bohrung auszustatten, die etwas größer als der Durchmesser der Welle ist, den Magnetring direkt auf der Welle anzuordnen und den Spalt zwischen der Bohrung und der Welle mit Kunststoff auszuspritzen. Diese Verfahrensweise hat den Nachteil einer teuren Fertigung, zumal Spritzgießmaschinen durch das Einlegen des Magneten nicht automatisch laufen können.

Es ist auch bekannt, den Magnetring auf einen Zwischenring konzentrisch aufzukleben, der zuvor auf die Welle aufgepreßt worden ist. Dieser Stand der Technik bildet den Ausgangspunkt der Erfindung nach dem Oberbegriff des Anspruchs 1.

Die bekannte Befestigungsart erfordert eine genaue konzentrische Ausrichtung des Magnetrings in bezug auf die Welle beim Aufkleben auf den Zwischenring und die anschließende Ruhigstellung der Welle bis zum Aushärten des Klebstoffs. Die Welle ist daher weiteren Bearbeitungsschritten vorübergehend entzogen.

Durch die WO-A-8001305 ist eine deratige Einrichtung bekannt, bei der ein auf einer Welle zu befestigender ringförmiger Halter Verwendung findet. Der Halter besteht dabei aus zwei ringförmigen Teilstücken, von denen das innere mit einer zylindrischen, geschlitzten Bohrung auf die Welle aufschiebbar ist und eine konisch geformte Außenseite aufweist. Auf diese ist das zweite mit einer entsprechenden konischen, geschlitzten Bohrung versehene Teilstück aufschiebbar, dessen Außenseite wiederum zylindrisch ausgebildet ist. Durch axiales Verschieben der beiden Teilstücke gegeneinander und Fixieren der.an den Teilstücken angeordneten Flansche durch Verschraubung wird der Halter über die konischen Flächen zur festen Anlage an die Welle gepreßt. Bei der bekannten Lösung erfolgt die Verspannung der beiden Teilstücke durch ihr unterschiedlich starkes Zusammenschieben, wobei daß Maß der gegenseitigen Verschiebung der Teilstücke durch die Schraubverbindung in den Flanschen bewirkt wird. Eine ungewollte radiale Preßspannung auf das zu befestigende Element ist dabei nicht ausgeschlossen.

Der Erfindung liegt die Aufgabe zugrunde, eine Einrichtung der eingangs genannten Art anzugeben, die eine schnelle, sichere Montage eines Ringelementes auf einer Welle ohne komplizierte Vorrichtungen zum Zentrieren des Ringelementes und ohne Klebverbindungen auskommt.

Diese Aufgabe wird durch die kennzeichnenden Merkmale des Anspruchs 1 gelöst. Mit der erfindungsgemäßen Lösung ergibt sich damit eine einfache Befestigung des Ringelementes auf dem zylindrischen Teil einer Welle ohne die Notwendigkeit von Schraubverbindungen.

Die Erfindung sieht als wesentliches Merkmal vor, daß das Ringelement von einem ringförmigen Halter gehalten wird, der aus elastomeren Kunststoff besteht und der zwischen dem inneren Umfang des Ringelementes und dem Umfang der Welle einen Zwischenraum schafft, der Materialverformungen aufnehmen kann und radiale Belastungen von dem Ringelement fernhält. Die genannten Materialverformungen sind Folge einer speziellen konischen Gestaltung der Bohrung des Halters, die beim Einstecken der Welle in die Bohrung diese in eine zylindrische Gestalt bringt. Zur Erzielung eines festen Sitzes wurde in den Halter zuvor eine Hülse eingesteckt, deren Wand solche Querschnittsabmessungen aufweist, daß für die Verformung der Bohrung des Halters und die daraus resultierende Materialbewegung so viel Platz bleibt, daß das auf dem Halter sitzende Ringelement mechanisch nicht belastet wird.

Durch die Maßnahmen nach den Ansprüchen 2 bis 4 wird das Ringelement bei der Montage des Halters auf der Welle genügend fest verspannt. Die Lösung nach Anspruch 5 ergibt aufgrund der Elastizität des Materials des Halters eine zentrische Lagerung des Ringelementes, ohne daß es übermäßigen Kräften ausgesetzt ist.

Die Erfindung wird nachfolgend unter Bezugnahme auf ein in den Zeichnungen dargestelltes Ausführungsbeispiel näher erläutert. Es zeigt:

Fig. 1 im Axialschnitt ein Wellenende, einen Halter mit darauf sitzendem Ringelement, eine Klemmhülse mit radial erstrecktem Ringflansch und ein Einpreßwerkzeug,

Fig. 2 den Halter und die Klemmhülse im teilmontierten Zustand, und

2

Fig. 3 die Einrichtung nach der Erfindung im fertig montierten Zustand am Ende des Einpreßvorgangs.

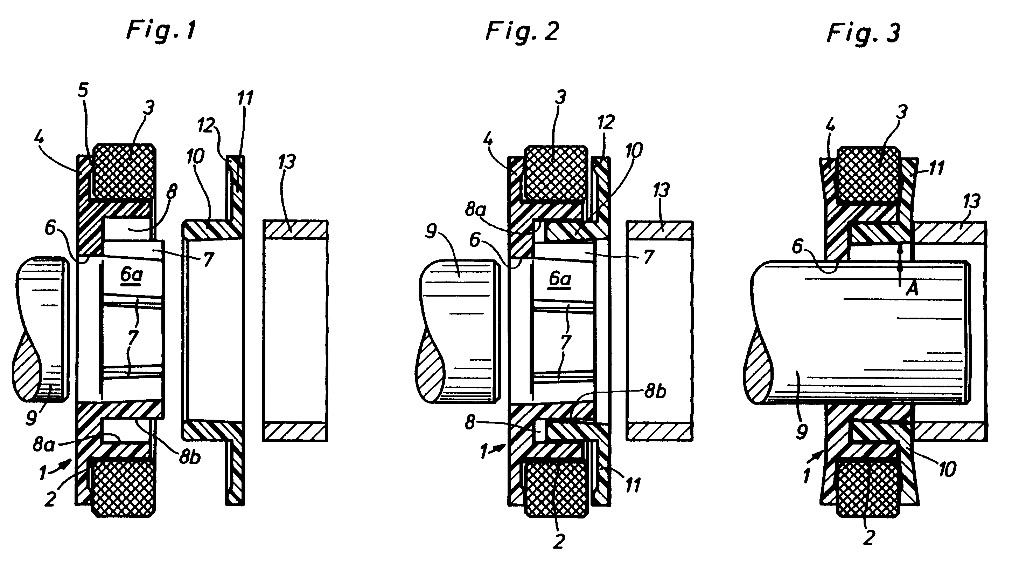

Man erkennt in Fig. 1 einen ringförmigen Halter (1), der eine Umfangsfläche aufweist, die mit mehreren kleinen, radial vorstehenden und axial verlaufenden Rippen (2) versehen ist, auf denen ein als Ringelement (3) ausgebildeter keramischer Ferritmagnet sitzt. Der Halter (1) weist benachbart der einen Radialfläche des Ringelementes (3) einen sich radial erstreckenden Ringflansch (4) auf, der auf der dem Ringelement (3) zugewandten Seite mit einem axial vorstehenden Ringwulst (5) versehen ist. Der Halter (1) weist eine Bohrung (6) auf, die in einem Teilabschnitt (6a) durch axial bis zum Ende der Bohrung (6) verlaufende Schlitze (7) lamelliert ist. In dem lamellierten Teilabschnitt (6a) ist die Bohrung (6) leicht konisch verengt. In diesem Bereich ist die Bohrung (6) von einer Ringnut (8) umgeben, die eine zylindrische äußere Umfangswand (8a) und eine im unmontierten Zustand des Halters (1) ebenfalls zylindrische innere Umfangswand (8b) aufweist. Diese Nut (8) öffnet sich in diejenige Radialebene des Halters (1), die dem zylindrischen Abschnitt der Bohrung (6) abgewandt ist. In jenem Abschnitt des Halters (1) befindet sich auch der Ringflansch (4).

Der Durchmesser des zylindrischen Abschnitts der Bohrung (6) entspricht dem Außendurchmesser einer Welle (9), auf der der Halter (1) angebracht werden soll.

Zu der Einrichtung nach der Erfindung gehört weiterhin eine Klemmhülse (10), deren Bohrung leicht konisch verläuft, wobei die Konizität jener der Innenwand des lamellierten Teilabschnitts (6a) der Bohrung (6) im Halter (1) entspricht, dieser aber entgegengesetzt gerichtet ist. Der Außenumfang der Klemmhülse (10) ist zylindrisch und weist einen Durchmesser auf, der dem Außendurchmesser der Ringnut (8) entspricht. Der engste Innendurchmesser der Klemmhülse (10) entspricht dem Innendurchmesser der Ringnut (8) im Halter (1). An demjenigen Ende, an dem sie die kleinere Wandstärke aufweist, ist die Klemmhülse (10) mit einem Ringflansch (11) versehen, dessen Außendurchmesser etwa dem des Ringflanschs (4) am Halter (1) entspricht. Auf derjenigen Seite, auf der sich auch die Klemmhülse (10) erstreckt, ist der Ringflansch (11) mit einem Ringwulst (12) versehen.

In Fig. 1 ist ferner ein nicht zu der erfindungsgemäßen Einrichtung gehörendes Einpreßwerkzeug (13) dargestellt, das später noch beschrieben wird.

Der Halter (1) und die Klemmhülse (10) bestehen aus einem elastomeren Material und sind daher verformbar.

Zur Montage des Ringelementes (3) auf der Welle (9) wird das Ringelement (3) zunächst auf den Halter (1) aufgeschoben, auf dem es von den Rippen (2) festgehalten wird und an dem Ringwulst (5) des Ringflansches (4) anliegt. Sodann wird gemäß Fig. 2 die Klemmhülse (10) in die Ringnut (8) des Halters (1) eingeschoben. Wie Fig. 2 erkennen läßt, ist die Konizität der Bohrung der Klemmhülse (10) umgekehrt zu der des lamellierten Teilabschnitts (6a) der Bohrung (6) im Halter (1). Es ergibt sich dadurch zwischen der inneren Umfangswand (8b) der Ringnut (8) und der Bohrung der Klemmhülse (10) ein keilförmiger Spalt, der sich nach außen öffnet. Das Ende der dickeren Wandstärke der Klemmhülse (10) ist dem Nutgrund benachbart. Das Einschieben der Klemmhülse (10) in die Ringnut (8) erfordert keinen großen Kraftaufwand und ruft auch keine merklichen radial nach außen gerichteten Kräfte an dem Halter (1) hervor, die die Integrität des Ringelementes (3) gefährden könnten.

Im so vormontierten Zustand (Fig. 2 ist eine Vorstufe davon kurz bevor der Ringwulst (12) am Ringflansch (11) der Klemmhülse (10) sich an das Ringelement (3) anlegt) wird dann die Anordnung aus Halter (1), Ringelement (3) und Klemmhülse (10) auf die Welle (9) mit Hilfe des Einpreßwerkzeugs (13) aufgepreßt. Dabei wird von der Welle (9) der lamellierte Teilabschnitt (6a) der Bohrung (6) des Halters (1) in eine zylindrische Form gebracht, wobei das den Teilabschnitt (6a) umgebende Material des Halters (1) entsprechend der zuvor vorhandenen Konizität nach außen in den Ringspalt konischen Querschnitts zwischen der Klemmhülse (10) und der inneren Umfangswand (8b) der Ringnut (8) verdrängt wird, wie durch die Pfeile A in Fig. 3 angedeutet, so daß dieser Spalt geschlossen wird. Die elastische Kraft des so verdrängten Materials sichert die Anordnung mit ausreichender Drehfestigkeit auf der Welle (9). Beim Aufpressen der vormontierten Anordnung aus Halter, Ringelement und Klemmhülse wird zugleich die Klemmhülse (10) vollständig bis auf den Nutgrund der Ringnut (8) gedrückt, wodurch sich die Ringflansche (4) und (11) an Halter (1) und Klemmhülse (10) elastisch verbiegen und dadurch auf das Ringelement (3) gegensinnige axial gerichtete Kräfte ausüben, die das Ringelement (3) zusätzlich festhalten.

**Patentansprüche**

1. Einrichtung zum Befestigen eines Ringelementes auf einer Welle mit einem ringförmigen Halter auf dem das Ringelement konzentrisch angebracht ist und der eine Bohrung zur Aufnahme der Welle aufweist, **gekennzeichnet durch** folgende Merkmale:

a) der Halter (1) besteht aus einem elastomeren Material und seine Bohrung (6) weist einen konischen Teilabschnitt (6a) auf, der in axialer Richtung lamelliert ist, wobei der konische Teilabschnitt (6a) beim Aufschieben auf die Welle (9) zylindrisch verformbar ist;

b) in einer Radialfläche des Halters (1) ist eine den konischen Teilabschnitt (6a) konzentrisch umgebende zylindrische Ringnut (8) ausgebildet;

c) es ist eine Klemmhülse (10) vorgesehen, deren Außenumfang zylindrisch ist, mit einem Außendurchmesser, der dem Außendurchmesser der Ringnut (8) im Halter (1) spricht, und deren Bohrung konisch ist mit einer Konizität, die der des konischen Teilabschnitts (6a) der Bohrung (6) entspricht, dieser aber entgegengesetzt gerichtet ist, und deren kleinster Durchmesser dem Innendurchmesser der Ringnut (8) im Halter (1) entspricht;

d) die Klemmhülse (10) ist in die Ringnut (8) eingeschoben, wobei ihr Abschnitt größter Wandstärke dem Nutgrund benachbart ist und

e) der Halter (1) mit daran angebrachter Klemmhülse (10) ist, unter Verformung des den konischen Teilabschnitt (6a) seiner Bohrung (6) umgebenden Materials, auf die Welle (9) aufpreßbar.

2. Einrichtung nach Anspruch 1, **dadurch gekennzeichnet**, daß der Halter (1) einen sich radial erstreckenden Ringflansch (4) aufweist, an welchem eine Radialfläche des Ringelementes (3) anliegt, und die Klemmhülse (10) an ihrem Ende kleiner Wandstärke mit einem sich radial erstreckenden Ringflansch (11) versehen ist, der an der anderen Radialfläche des Ringelementes (3) anliegt.

3. Einrichtung nach Anspruch 2, **dadurch gekennzeichnet**, daß die beiden Ringflansche (4, 11) auf ihrer dem Ringelement (3) zugewandten Seite jeweils mit einem Ringwulst (5, 12) versehen sind.

4. Einrichtung nach einem der vorhergehenden Ansprüche, **dadurch gekennzeichnet**, daß die Klemmhülse (10) aus einem elastomeren Material besteht.

5. Einrichtung nach einem der vorhergehenden Ansprüche, **dadurch gekennzeichnet**, daß das Ringelement (3) auf in axialer Richtung verlaufenden Rippen (2) sitzt, die an einer Außenumfangsfläche des Halters (1) radial vorstehend ausgebildet sind.

## Claims

1. Device for fastening a circular element on a shaft having a circular holder on which the circular element is concentrically mounted and comprising a bore for receiving the shaft, **characterised by** the following features:

a) the holder (1) is made of an elastomer material, and its bore (6) has a conical section (6a) which is lamellated in the axial direction, in which respect the conical section (6a) is cylindrically deformable whilst being pushed onto the shaft (9);

b) a cylindrical annular groove (8), which concentrically surrounds the conical section (6a), is formed in a radial surface of the holder (1);

c) a clamping sleeve (10) is provided, the outer periphery of which is cylindrical, with an outside diameter corresponding to the outside diameter of the annular groove (8) in the holder (1), and the bore of which is conical with a conicity corresponding to that of the conical section (6a) of the bore (6), though in opposition thereto, and the smallest diameter of which corresponds to the inside diameter of the annular groove (8) in the holder (1);

d) the clamping sleeve (10) is pushed into the annular groove (8), whereby its section of greatest wall thickness is adjacent the groove base; and

e) the holder (1) with a clamping sleeve (10) attached thereto is pressed onto the shaft (9) whilst deforming the material surrounding the conical section (6a) of its bore (6).

2. Device according to claim 1, **characterised in that** the holder (1) has a radially extending circular flange (4) which is abutted by a radial surface of the circular element (3), and that the clamping sleeve (10) is provided at its end of smaller wall thickness with a radially extending circular flange (11) which abuts the other radial surface of the circular element (3).

3. Device according to claim 2, **characterised in that** the two circular flanges (4, 11) are provided on their side facing towards the circular element (3) with a respective annular rim (5, 12).

4. Device according to one of the above claims, **characterised in that** the clamping sleeve (10) is made of an elastomer material.

5. Device according to one of the above claims, **characterised in that** the circular element (3) is seated on ribs (2) which extend in the axial direction and which radially protrude on one outer peripheral surface of the holder (1).

**Revendications**

1. Dispositif de fixation d'un élément annulaire sur un arbre, à l'aide d'un support annulaire sur lequel l'élément annulaire est monté concentriquement et qui présente un alésage pour recevoir l'arbre, **caractérisé par** les caractéristiques suivantes :

a) le support (1) est réalisé en un matériau élastomère et son alésage (6) présente une section partielle conique (6a), formée en lamelles dans la direction radiale, la section partielle conique (6a) étant déformable cylindriquement lors de l'enfilage sur l'arbre (9);

b) une gorge annulaire cylindrique (8), qui entoure concentriquement la section partielle conique (6a), est réalisée dans une face radiale du support (1);

c) il est prévu un manchon de serrage (10), dont la périphérie extérieure est cylindrique, avec un diamètre extérieur qui correspond au diamètre extérieur de la gorge annulaire (8) dans le support (1) et dont l'alésage est conique, avec une conicité qui correspond à celle de la section partielle conique (6a) de l'alésage (6), mais orientée en sens inverse, et dont le plus petit diamètre correspond au diamètre intérieur de la gorge annulaire (8) ménagée dans le support (1);

d) le manchon de serrage (10) est inséré dans la gorge annulaire (8), sa partie de plus grande épaisseur de paroi étant voisine du fond de gorge et

e) le support (1), avec son manchon de serrage (10) monté dessus, est susceptible d'être pressé sur l'arbre (9), avec une déformation du matériau qui entoure la section partielle conique (6a) de son alésage (6).

2. Dispositif selon la revendication 1, **caractérisé en ce que** le support (1) présente une bride annulaire (4) qui s'étend radialement, sur laquelle appuie une face radiale de l'élément annulaire (3), et le manchon de serrage (10) est pourvu, à son extrémité de moindre épaisseur de paroi, d'une bride annulaire (11) qui s'étend radialement et appuie sur l'autre face radiale de l'élément annulaire (3).

3. Dispositif selon la revendication 2, **caractérisé en ce que** les deux brides annulaires (4,11) sont chacune pourvues d'un bourrelet annulaire (5,12), sur leur face tournée vers l'élément annulaire (3).

4. Dispositif selon l'une des revendications précédentes, **caractérisé en ce que** le manchon de serrage (10) est en matériau élastomère.

5. Dispositif selon l'une des revendications précédentes, **caractérisé en ce que** l'élément annulaire (3) repose sur des nervures (2) qui s'étendent en direction axiale, réalisées pour faire saillie radialement sur une surface périphérique extérieure du support (1).

Fig. 1    Fig. 2    Fig. 3